# EUROPÄISCHE PATENTSCHRIFT

(11) **EP 1 662 186 B1**
(45) Veröffentlichungstag und Bekanntmachung des Hinweises auf die Patenterteilung: **11.01.2012**
(21) Anmeldenummer: 05026003.3
(22) Anmeldetag: 29.11.2005
(51) Int. Cl.: F16H 61/40

(54) **Hydraulischer Kreislauf mit Speisepumpe**
Hydraulic circuit with charge pump
Circuit hydraulique avec pompe d'alimentation

(30) Priorität: 30.11.2004 DE 102004057740
(43) Veröffentlichungstag der Anmeldung: 31.05.2006
(73) Patentinhaber: Bosch Rexroth AG, 70184 Stuttgart (DE)
(72) Erfinder: Essig, Heinz-Gerhard, 89173 Lonsee (DE)
(74) Vertreter: Körfer, Thomas

(56) Entgegenhaltungen:
- EP-A- 0 249 154
- DE-A1- 3 518 434
- GB-A- 1 425 820
- US-A- 3 035 593
- US-A- 5 186 612
- "Axial Piston Variable Displacement Pump A4VG" November 2003 (2003-11), REXROTH BOSCH GROUP , XP002363641 * Seite 45 *
- PATENT ABSTRACTS OF JAPAN Bd. 015, Nr. 303 (M-1142), 2. August 1991 (1991-08-02) -& JP 03 110224 A (HITACHI CONSTR MACH CO LTD), 10. Mai 1991 (1991-05-10)
- PATENT ABSTRACTS OF JAPAN Bd. 2000, Nr. 09, 13. Oktober 2000 (2000-10-13) -& JP 2000 179647 A (DAIKIN IND LTD), 27. Juni 2000 (2000-06-27)

## Beschreibung

Die Erfindung betrifft einen hydraulischen Kreislauf mit einer Speisepumpe zum Erzeugen eines Speisedrucks.

In einem geschlossenen hydraulischen Kreislauf, in dem eine reversierbare verstellbare Hydropumpe in eine erste oder zweite Arbeitsleitung fördert, wird meist zum Erzeugen eines Mindestsystemdrucks in dem Kreislauf zusätzlich zu der verstellbaren Hydropumpe eine als Konstantpumpe ausgeführte Speisepumpe verwendet. In dem technischen Informationsblatt RD 92 003/11.03 | A4VG der Firma Bosch Rexroth AG ist es hierzu auf Seite 45/52 beispielsweise dargestellt, daß die verstellbare Hydropumpe sowie die Speisepumpe über eine gemeinsame Antriebswelle angetrieben werden. Diese Antriebswelle ist fest mit einer Antriebsmaschine verbunden. Normalerweise handelt es sich bei der Antriebsmaschine um eine Dieselmaschine, die zum Anlassen über einen elektrischen Anlasser gestartet werden muß. Da die Antriebswelle mit der Antriebsmaschine mechanisch gekoppelt ist, muß durch den Anlasser beim Starten der Antriebsmaschine nicht nur die zum Starten der Dieselmaschine erforderliche Leistung aufgebracht werden, sondern auch die zum Druckaufbau durch die Speisepumpe erforderliche Energie.

Durch diese zusätzliche Last, die entsteht, da die Speisepumpe auch bei der Anlasserdrehzahl bereits den Systemdruck aufbaut, muß der elektrische Anlasser entsprechend größer dimensioniert werden.

Die DE 35 18 434 A1 wird als nächstliegender Stand der Technik angesehen.

Es ist daher die Aufgabe der Erfindung, einen hydraulischen Kreislauf zu schaffen, dessen Last beim Durchdrehen der Antriebswelle reduziert werden kann.

Die Aufgabe wird durch den hydraulischen Kreislauf mit den Merkmalen nach Anspruch 1 gelöst.

Der erfindungsgemäße hydraulische Kreislauf weist eine Speisepumpe zum Erzeugen des Speisedrucks auf. Der maximale Speisedruck wird durch ein Speisedruckbegrenzungsventil begrenzt, um so den Kreislauf vor unzulässig hohen Speisedrücken zu schützen. Erfindungsgemäß ist zusätzlich zu dem Speisedruckbegrenzungsventil, der den maximalen Druck auf einen ersten Druckwert begrenzt, eine Speisedruckabsenkungsvorrichtung vorgesehen. Mittels der Speisedruckabsenkungsvorrichtung kann der durch die Speisepumpe erzeugte Speisedruck auf einen niedrigeren zweiten Druckwert abgesenkt werden. Damit fördert die fest mit der Antriebsmaschine gekoppelte Speisepumpe während des Anlassens z.B. des Dieselmotors nicht gegen den vollen Speisedruck, sondern gegen einen abgesenkten Speisedruck. Über die Höhe des zweiten Druckwerts ist so die Entlastung einstellbar.

In den Unteransprüchen sind vorteilhafte Weiterbildungen der erfindungsgemäßen hydraulischen Anlage dargestellt.

Insbesondere ist es vorteilhaft, ein Speisedruckhalteventil und damit einen zweiten Druckwert zu verwenden, der zwar unter dem ersten Druckwert liegt, aber dennoch deutlich oberhalb des Druckniveaus des drucklosen Tankvolumens liegt. Damit wird beispielsweise verhindert, daß ein lediglich kurzes Abstellen des Fahrzeugs mit anschließendem Wiederanlassen dazu führt, daß das Speisedrucksystem des hydraulischen Kreislaufs während des Anlaßvorgangs bis auf das Tankniveau entspannt ist. Durch die Speisedruckabsenkungsvorrichtung wird dagegen der Speisedruck lediglich auf einen niedrigeren zweiten Druckwert abgesenkt, der jedoch eine sofortige Inbetriebnahme aller mit dem Speisedruck versorgten Geräte, z.B. auch der Stellvorrichtung für die verstellbare Hydropumpe ermöglicht. So muß nach dem Anlassen nicht erst wieder abgewartet werden, daß die Speisepumpe das Drucksystem auf den zum Betreiben der angeschlossenen Aggregate erforderlichen Druck anhebt.

Weiterhin ist es vorteilhaft, das Speisedruckhalteventil über ein Absenkventil anzusteuern. Das Absenkventil wird dabei vorzugsweise als elektromagnetisch betätigtes Schaltventil ausgeführt. Die elektromagnetische Ansteuerung läßt sich in einfacher Weise mit der Stromversorgung des Anlassers kombinieren, so daß während des Anlaßvorgangs automatisch die Druckabsenkung aktiviert wird.

Eine weitere vorteilhafte Ausführungsform sieht vor, daß das Absenkventil gemeinsam für die Druckabsenkungsvorrichtungen mehrerer hydraulischer Kreisläufe verwendet wird. Die einzelnen hydraulischen Kreisläufe, die jeweils mit einer Speisepumpe ausgerüstet sind, werden so durch Betätigung lediglich eines Absenkventils hinsichtlich des Speisedrucks abgesenkt. Dabei können insbesondere die eingestellten abgesenkten Drücke sowie die durch das Speisedruckbegrenzungsventil eingestellten Speisedrücke im normalen Betrieb für die einzelnen hydraulischen Kreisläufe unterschiedlich eingestellt werden.

Die Erfindung ist in der Zeichnung dargestellt und wird anhand der nachfolgenden Beschreibung detailliert erläutert. Es zeigen:
- Fig. 1: ein erstes Ausführungsbeispiel eines erfindungsgemäßen hydraulischen Kreislaufs;
- Fig. 2: ein zweites Ausführungsbeispiel eines erfindungsgemäßen hydraulischen Kreislaufs;
- Fig. 3: ein drittes Ausführungsbeispiel eines erfindungsgemäßen hydraulischen Kreislaufs zur gemeinsamen Ansteuerung mehrerer hydraulischer Kreisläufe und
- Fig. 4: ein viertes Ausführungsbeispiel eines erfindungsgemäßen hydraulischen Kreislaufs zur gemeinsamen Ansteuerung mehrerer hydraulischer Kreisläufe.

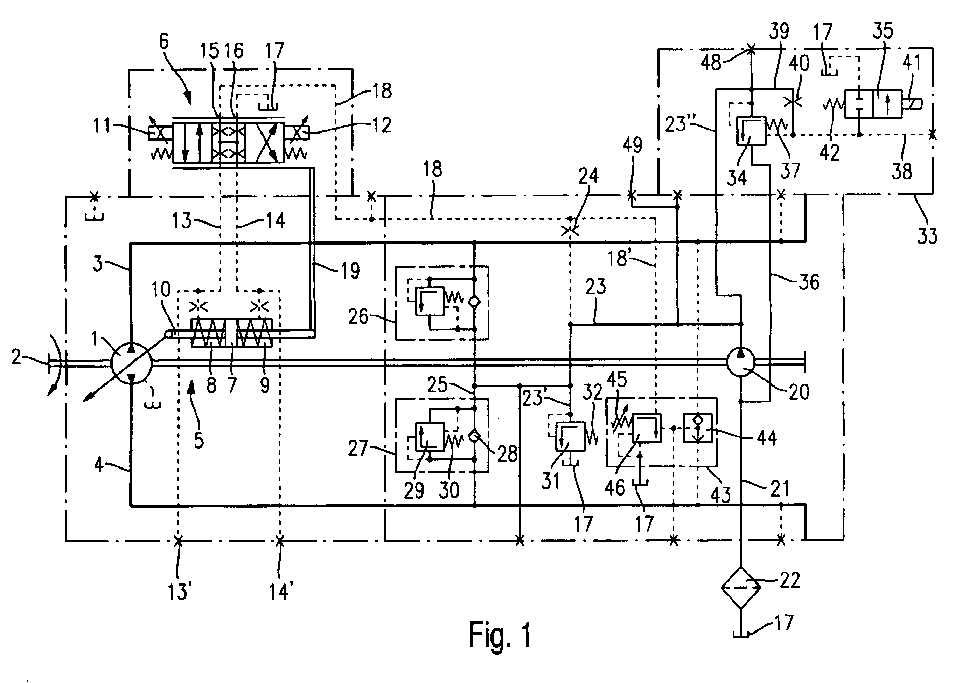

Fig. 1 zeigt einen erfindungsgemäßen hydraulischen Kreislauf mit einer verstellbaren Hydropumpe 1, die über eine Antriebswelle 2 von einem nicht dargestellten Antriebsmotor angetrieben wird.

Das von der Hydropumpe 1 geförderte Druckmittel wird in Abhängigkeit von der eingestellten Fördermenge und Förderrichtung in eine erste Arbeitsleitung 3 oder eine zweite Arbeitsleitung 4 gefördert. Über die erste Arbeitsleitung 3 bzw. die zweite Arbeitsleitung 4 sowie den daran angeschlossenen Verbraucher, der in der Fig. 1 wiederum nicht dargestellt ist, wird ein geschlossener hydraulischer Kreislauf ausgebildet.

Zum Verstellen der Hydropumpe 1 ist eine Verstellvorrichtung 5 vorgesehen. Die Verstellvorrichtung 5 wird durch ein Stelldruckregelventil 6 mit den zur Verstellung erforderlichen Stelldrücken beaufschlagt. Die Verstellvorrichtung 5 umfaßt hierzu einen Stellkolben 7, der in dem Zylinder der Verstellvorrichtung 5 angeordnet ist und diesen in einen ersten Stelldruckraum 8 und einen zweiten Stelldruckraum 9 teilt.

Der Stellkolben 7 wird von einer Kolbenstange 10 durchdrungen, die an ihrem einen Ende den Verstellmechanismus der Hydropumpe 1 betätigt. Damit wird die jeweils durch den Stellkolben 7 eingenommene Position auf den Mechanismus der Hydropumpe 1 übertragen.

Um den ersten Stelldruckraum 8 bzw. den zweiten Stelldruckraum 9 mit den entsprechenden Stelldrücken zu beaufschlagen, muß das Stelldruckregelventil 6 aus seiner in der Fig. 1 dargestellten Ruheposition ausgelenkt werden. Hierzu greift ein erster Aktuator 11 auf der einen Seite des Stelldruckregelventils 6 an. In entgegengesetzter Richtung kann das Stelldruckregelventil 6 durch einen zweiten Aktuator 12 ebenfalls mit einer Kraft beaufschlagt werden. In Abhängigkeit von der an dem ersten Aktuator 11 bzw. dem zweiten Aktuator 12 angelegten Signal wirkt auf das Stelldruckregelventil 6 eine Kraft. Um das Stelldruckregelventil 6 nach einer Auslenkung bei Ausbleiben eines Stellsignals zurück in seine Ausgangsposition bringen zu können, greift an dem Stelldruckregelventil 6 jeweils gleichwirkend mit den Aktuatoren 11 oder 12 je eine Rückstellfeder an.

Das Stelldruckregelventil 6 ist über eine erste Stelldruckleitung 13 und eine Drossel mit der ersten Stelldruckkammer 8 verbunden. Über eine zweite Stelldruckleitung 14 und eine zweite Drossel ist das Stelldruckregelventil 6 mit der zweiten Stelldruckkammer 9 verbunden.

Das Stelldruckregelventil 6 wird bei Anliegen eines Stellsignals an dem ersten Aktuator 11, z.B. einem Proportionalmagneten, in Richtung einer ersten Endposition verstellt. Eine Verstellung in Richtung dieser ersten Endposition bewirkt die Verbindung eines Eingangs 15 des Stelldruckregelventils 6 mit der ersten Stelldruckleitung 13. Gleichzeitig wird mit zunehmender Verstellung des Stelldruckregelventils 6 in Richtung seiner ersten Endposition ein Ausgang 16 mit der zweiten Stelldruckleitung 14 verbunden. Während der Eingang 15 mit einer Stelldruckversorgungsleitung 18 verbunden wird, wird gleichzeitig zunehmend die zweite Stelldruckleitung 14 mit dem Ausgang 16 verbunden. Der Ausgang 16 steht über eine Verbindungsleitung mit dem Tankvolumen 17 in Verbindung.

Bei der beschriebenen Auslenkung des Stelldruckregelventils 16 wird die erste Stelldruckkammer 8 mit dem in der Stelldruckversorgungsleitung 18 herrschenden Druck bedrückt, während gleichzeitig die zweite Stelldruckkammer 9 in das Tankvolumen 17 entspannt wird.

Eine Auslenkung der Hydropumpe 1 in die entgegengesetzte Richtung wird erreicht, indem der zweite Aktuator 12 mit einem Steuersignal beaufschlagt wird. Infolgedessen wird das Stelldruckregelventil 6 in Richtung seiner zweiten Endposition verstellt, in der aus der Stelldruckversorgungsleitung 18 der zweite Stelldruckraum 9 bedrückt und gleichzeitig der erste Stelldruckraum 8 in das Tankvolumen 17 entspannt wird. Um eine einem Steuersignal an dem ersten oder zweiten Aktuator 11 oder 12 entsprechende Auslenkung der Hydropumpe 1 zu erreichen, wird die Stellbewegung des Stellkolbens 7 über eine Rückkopplungsstange 19 auf das Stelldruckregelventil 6 zurückgekoppelt.

Zur Überwachung der Drücke sind die erste Stelldruckleitung 13 und die zweite Stelldruckleitung 14 mit einem ersten Stelldruckmeßanschluß 13' und einem zweiten Stelldruckmeßanschluß 14' verbunden.

Vor der Inbetriebnahme des Systems ist der hydraulische Kreislauf drucklos. Es ist daher mit der Antriebswelle 2 zusätzlich zu der Hydropumpe 1 eine Speisepumpe 20 verbunden. Die Speisepumpe 20 ist als Konstantpumpe ausgeführt und zum Fördern in lediglich einer Richtung ausgelegt. Die Speisepumpe 20 saugt aus einem Tankvolumen 17 über eine Saugleitung 21 Druckmittel an. Beim Ansaugen des Druckmittels über die Saugleitung 21 wird das angesaugte Druckmittel in einem Filter 22 von Schmutzpartikeln gereinigt. Die Speisepumpe 20 ist Bestandteil eines Speisesystems und fördert das Druckmittel zum Einspeisen in den hydraulischen Kreislauf zunächst in eine Speisedruckleitung 23.

Die Speisedruckleitung 23 ist mit der Förderseite der Speisepumpe 20 verbunden. Um das Stelldruckregelventil 6 an seinem Eingangsanschluß 15 mit dem Speisedruck beaufschlagen zu können, verbindet die Stelldruckversorgungsleitung 18 den Eingangsanschluß 15 mit der Speisedruckleitung 23. In der Stelldruckversorgungsleitung 18 ist zum Reduzieren des Drucks eine Stelldruckdrossel 24 vorgesehen. An ihrem von der Speisepumpe 20 abgewandten Ende der Speisedruckleitung 23 mündet die Speisedruckleitung 23 in eine Verbindungsleitung 25 aus. Die Verbindungsleitung 25 verbindet die erste Arbeitsleitung 3 mit der zweiten Arbeitsleitung 4. In der Verbindungsleitung 25 sind eine erste Speiseventileinheit 26 und eine zweite Speiseventileinheit 27 angeordnet. Der Verbindungspunkt zwischen der Speisedruckleitung 23 und der Verbindungsleitung 25 liegt zwischen der ersten und der zweiten Speiseventileinheit 26 bzw. 27.

In der zweiten Speiseventileinheit 27 ist ein Rückschlagventil 28 ausgebildet, welches in Richtung der zweiten Arbeitsleitung 4 öffnet und so eine durchströmbare Verbindung zwischen der Ausmündung der Speisedruckleitung 23 und der zweiten Arbeitsleitung 4 freigibt, sofern der in der Speisedruckleitung 23 herrschende Speisedruck über dem in der Arbeitsleitung 4 herrschenden Arbeitsdruck liegt.

Zusätzlich ist in der zweiten Speiseventileinheit 27 ein Druckbegrenzungsventil 29 vorgesehen. Das Druckbegrenzungsventil 29 ist parallel zu dem Rückschlagventil 28 angeordnet. Das Druckbegrenzungsventil 29 weist eine den Öffnungsdruck des Druckbegrenzungsventils 29 einstellende Feder 30 auf. Die Eingangsseite des Druckbegrenzungsventils 29 ist mit der zweiten Arbeitsleitung 4 verbunden. Eine Verbindungsleitung führt einem Meßanschluß des Druckbegrenzungsventils 29 den in der zweiten Arbeitsleitung 4 herrschenden Druck zu, der das Druckbegrenzungsventil 29 entgegen der Kraft der Feder 30 beaufschlagt. Die Ausgangsseite des Druckbegrenzungsventils 29 ist mit der Verbindungsleitung 25 verbunden. Das Druckbegrenzungsventil 29 wird zudem mit dem in der Verbindungsleitung 25 herrschenden Druck über eine Umwegleitung gleichsinnig mit der Kraft der Feder 30 beaufschlagt. Das Druckbegrenzungsventil 29 öffnet daher, wenn der Differenzdruck zwischen der zweiten Arbeitsleitung 4 und der Verbindungsleitung 25 einen durch die Feder 30 vorgegebenen Wert übersteigt. In diesem Fall kann aus der zweiten Arbeitsleitung 4 Druckmittel durch das Druckbegrenzungsventil 29 abfließen. Das in dieser Richtung schließende Rückschlagventil 28 wird so umgangen.

Die erste Speiseventileinheit 26 ist dementsprechend aufgebaut. Das über das Druckbegrenzungsventil 29 bei Auftreten einer zu großen Druckdifferenz aus der zweiten Arbeitsleitung 4 strömende Druckmittel kann daher über das entsprechende Rückschlagventil der ersten Speiseventileinheit 26 in die erste Arbeitsleitung 3 abfließen. Dementsprechend ist auch in der ersten Speiseventileinheit 26 parallel zu dem dort angeordneten Rückschlagventil ein Druckbegrenzungsventil vorgesehen, das bei Übersteigen eines Schwellwerts durch die Druckdifferenz zwischen der ersten Arbeitsleitung 3 und der Verbindungsleitung 25 in Richtung auf die zweite Arbeitsleitung 4 hin öffnet.

Durch die erste Speiseventileinheit 26 und die zweite Speiseventileinheit 27 wird daher nicht nur ein Einspeisen von Druckmittel in die erste Arbeitsleitung 3 bzw. die zweite Arbeitsleitung 4 ermöglicht, sondern auch das Auftreten kritisch hoher Drücke in der ersten Arbeitsleitung 3 bzw. der zweiten Arbeitsleitung 4 verhindert. Hierzu wird die entsprechende, den Hochdruck führende Leitung in Richtung der Niederdruckseite entspannt.

Die Speisedruckleitung 23 selbst ist durch ein Speisedruckbegrenzungsventil 31 gegen das Auftreten überhöhter Drücke gesichert. Die Eingangsseite des Speisedruckbegrenzungsventils 31 ist hierzu über einen ersten Speisedruckleitungsabzweig 23' mit der Speisedruckleitung 23 verbunden. Das Speisedruckbegrenzungsventil 31 ist als Druckbegrenzungsventil ausgebildet, welches durch eine Speisedruckfeder 32 belastet ist. Entgegengesetzt der Kraft der Speisedruckfeder 32 wirkt eine hydraulische Kraft auf das Speisedruckbegrenzungsventil 31. Die hydraulische Kraft wird durch den in dem ersten Speisedruckleitungsabzweig 23' herrschenden Druck über eine Umwegleitung an eine entsprechende Meßfläche geleitet.

Übersteigt die dort wirkende hydraulische Kraft die Kraft der Speisedruckfeder 32, so öffnet das Speisedruckbegrenzungsventil 31 und gibt eine durchströmbare Verbindung von dem ersten Speisedruckleitungsabzweig 23' zu dem Tankvolumen 17 hin frei. Bei Auftreten zu hoher Drücke in dem Speisesystem wird die Speisedruckleitung 23 auf diese Weise in das Tankvolumen 17 entspannt. Das Speisedruckbegrenzungsventil 31 ist vorzugsweise so ausgeführt, daß in der Speisedruckleitung 23 ein maximaler Druck von 25 bar auftritt.

Kann bei einer zuvor beschriebenen Entlastung das Druckmittel aus der Hochdruck führenden Arbeitsleitung 3 oder 4 nicht in die jeweils andere Arbeitsleitung abgeleitet werden, so folgt ebenfalls über das Speisedruckbegrenzungsventil 31 die Entlastung in das Tankvolumen 17.

Durch die starre mechanische Kopplung der Speisepumpe 20 mit der Hydropumpe 1 und dem beide Pumpen gemeinsam antreibenden Antriebsmotor wird durch die als Konstantpumpe ausgeführte Speisepumpe 20 auch während des Anlassens der Antriebsmaschine bereits Druckmittel in die Speisedruckleitung 23 gefördert. Die Hydropumpe 1 befindet sich während des Anlaßvorgangs in Nullstellung. Um die Last für den Anlasser zu reduzieren, ist eine Speisedruckabsenkungsvorrichtung 33 vorgesehen.

Bei der dargestellten Ausführungsform umfaßt die Speisedruckabsenkungsvorrichtung 33 ein Speisedruckhalteventil 34 sowie ein damit verbundenes Absenkventil 35: Das Speisedruckhalteventil 34 ist eingangsseitig über einen zweiten Speisedruckleitungsabzweig 23'' mit der Speisedruckleitung 23 verbunden. Die Ausgangsseite des Speisedruckhalteventils 34 ist über eine Absenkleitung 36 mit der Saugleitung 21 und somit dem Tankvolumen 17 verbunden. Wie auch das Speisedruckbegrenzungsventil 31 so ist auch das Speisedruckhalteventil 34 durch eine Ventileinstellfeder 37 mit einer Federkraft beaufschlagt. An dem Speisedruckbegrenzungsventil 31 wird durch die Speisedruckfeder 32 ein erster Druckwert eingestellt, der vorzugsweise 25 bar beträgt. Im Gegensatz zu dem Speisedruckbegrenzungsventil 31 ist das Speisedruckhalteventil 34 vorzugsweise als Differenzdruckventil ausgebildet. Diejenige Druckdifferenz, bei der das Speisedruckhalteventil 34 öffnet, wird als zweiter Druckwert durch die Ventileinstellfeder 37 festgelegt. Ihr entgegen wirkt auf das Speisedruckhalteventil 34 eine hydraulische Kraft, die durch den in dem zweiten Speisedruckleitungsabzweig 23'' herrschenden Druck an einer Meßfläche des Speisedruckhalteventils 34 verursacht wird. Gleichsinnig mit der Ventileinstellfeder 37 wirkt auf das Speisedruckhalteventil 34 eine hydraulische Kraft durch den in einer Steuerdruckleitung 38 herrschenden Steuerdruck. Die Steuerdruckleitung 38 ist über eine Verbindungsleitung 39 mit dem zweiten Speisedruckleitungsabzweig 23'' verbunden. In der Verbindungsleitung 39 ist eine Steuerdruckdrossel 40 angeordnet.

Der zweite Druckwert wird durch die Ventileinstellfeder 37 bestimmt. Die Ventileinstellfeder 37 kann beispielsweise einen Differenzdruck von 6 bar für das Speisedruckhalteventil 34 vorgeben. Liegt in dem zweiten Speisedruckleitungsabzweig 23'' ein höherer Druck als 6 bar an, so kann durch Entspannen der Steuerdruckleitung 38 auf einen verschwindenden Druck das Speisedruckhalteventil 34 betätigt werden. Bei betätigtem Speisedruckhalteventil 34 ist der zweite Speisedruckleitungsabzweig 23'' mit der Absenkleitung 36 verbunden. Der von der Speisepumpe 20 erzeugte Druck fällt damit bis auf 6 bar ab, so daß die Last für den Anlasser reduziert ist.

Ein weiteres Absinken des Drucks durch Betätigung des Speisedruckhalteventils 34 wird verhindert, da selbst bei vollständig entspannter Steuerdruckleitung 38 durch die Ventileinstellfeder 37 ein Druck von stets mindestens 6 bar in dem System aufrechterhalten wird. Die Ventileinstellfeder 37 schließt das Speisedruckhalteventil bei vorzugsweise 6 bar. Dies hat den Vorteil, daß bei Betätigung der Speisedruckabsenkungsvorrichtung 33 nicht das System vollständig entspannt wird und anschließend wieder durch die Speisepumpe 20 befüllt werden und auf einen höheren Druck gehoben werden muß. Vielmehr bleibt auch bei einem Druck von lediglich 6 bar, auf den die Speisedruckleitung 23 bei Betätigung der Speisedruckabsenkungsvorrichtung 33 abgesenkt ist, die Funktionalität des Stelldruckregelventils 6 sowie der Verstellvorrichtung 5 oder weiterer angeschlossener Einrichtungen erhalten.

Während des normalen Betriebs wird über die Steuerdruckdrossel 40 Druckmittel aus dem zweiten Speisedruckleitungsabzweig 23" in die Steuerdruckleitung 38 gefördert. Der Druck in der Steuerdruckleitung 38 entspricht daher normalerweise dem Druck in der Speisedruckleitung 23. Ein Druckgefälle an dem Differenzdruckventil 34 existiert nicht und das Speisedruckhalteventil 34 wird durch die Ventileinstellfeder 37 in seiner geschlossenen Position gehalten.

Die Speisedruckabsenkungsvorrichtung 33 weist zusätzlich ein Absenkventil 35 auf, das die Steuerdruckleitung 38 mit dem Tankvolumen 17 verbinden kann. Hierzu ist ein 2/2-Wegeventil vorgesehen, welches über einen Elektromagneten 41 entgegen der Kraft einer Feder 42 betätigt wird. Bei Bestromen des Elektromagneten 41 wird aus der Ruheposition heraus das Absenkventil 35 in seine aktive Position gebracht, in der die Steuerdruckleitung 38 mit dem Tankvolumen verbunden ist. Dadurch wird die Steuerdruckleitung 38 auf das Druckniveau des Tankvolumens 17 entspannt, da die Entspannung der Steuerdruckleitung 38 in das Tankvolumen 17 praktisch ungedrosselt erfolgt. Das Nachströmen von Druckmittel aus dem Speisedruckleitungsabzweig 23'' erfolgt dagegen über die Steuerdruckdrossel 40.

Entsprechend fällt die in gleicher Richtung mit der Kraft der Ventileinstellfeder 37 auf das Speisedruckhalteventil 34 wirkende hydraulische Kraft. Liegt gleichzeitig der Druck in der Speisedruckleitung 23 und damit in dem zweiten Speisedruckleitungsabzweig 23'' oberhalb des zweiten Druckwerts, so öffnet in bereits beschriebener Weise das Speisedruckhalteventil 34 und entspannt die Speisedruckleitung 23 über den zweiten Speisedruckleitungsabzweig 23" in die mit dem Tankvolumen 17 verbundene Saugleitung 21. Wird der Elektromagnet 41 dagegen nicht mehr bestromt, so bringt die Feder 42 das Schaltventil 35 zurück in seine geschlossene Ausgangsposition. In der Ausgangsposition des Absenkventils 35 ist die Verbindung zwischen dem Tankvolumen 17 und der Steuerdruckleitung 38 unterbrochen. Die Steuerdruckleitung 38 wird daher über die Steuerdruckdrossel 40 wieder auf das Druckniveau der Speisedruckleitung 23 gebracht. Die an dem Speisedruckhalteventil 34 angreifende Druckdifferenz sinkt und das Speisedruckhalteventil 34 wird bei Unterschreiten des zweiten Druckwerts durch die Druckdifferenz zwischen Speisedruckleitungsabzweig 23" und Steuerdruckleitung 38 geschlossen.

Zur Sicherung des beschriebenen hydraulischen Kreislaufs ist zudem eine Druckabschneidungsvorrichtung 43 vorgesehen. Die Druckabschneidungsvorrichtung 43 weist ein Druckabschneidungsventil 46 sowie ein Wechselventil 44 auf. Das Wechselventil 44 ist mit seinen beiden Eingangsanschlüssen mit der ersten Arbeitsleitung 3 bzw. mit der zweiten Arbeitsleitung 4 verbunden. Der Ausgang des Wechselventils 44 ist mit einem Steueranschluß des Druckabschneidungsventils 46 verbunden. Entgegen der hydraulischen Kraft an dem Steueranschluß des Druckabschneidungsventils 46 wirkt auf das Druckabschneidungsventil 46 die Kraft einer einstellbaren Feder 45. Die Kraft der einstellbaren Feder 45 beaufschlagt das Druckabschneidungsventil 46 in Richtung seiner geschlossenen Stellung.

Über das Wechselventil 44 wird der Steueranschluß des Druckabschneidungsventils 46 jeweils mit dem höheren der in der ersten bzw. zweiten Arbeitsleitung 3 bzw. 4 herrschenden Drücke beaufschlagt. Nimmt der jeweils höhere der Arbeitsleitungsdrücke einen kritischen Wert an, so wird das Druckabschneidungsventil 46 in Richtung seiner geöffneten Position verschoben. Das Druckabschneidungsventil 46 ist eingangsseitig über einen Stelldruckversorgungsleitungszweig 18' mit der Stelldruckversorgungsleitung 18 verbunden. Ausgangsseitig ist das Druckabschneidungsventil 46 mit dem Tankvolumen 17 verbunden. Bei Auftreten kritisch hoher Drücke in einer der beiden Arbeitsleitungen 3 oder 4 wird folglich die Stelldruckversorgungsleitung 18 in Richtung des Tankvolumens 17 entspannt. Dementsprechend sinkt der zum Betätigen der Verstellvorrichtung 5 verfügbare Druck. Die Stelldrücke in dem ersten Stelldruckraum 8 und dem zweiten Stelldruckraum 9 werden so unabhängig von der Position des Stelldruckregelventils 6 angeglichen. Aufgrund der zentrierenden Kraft der in dem ersten Stelldruckraum 8 und dem zweiten Stelldruckraum 9 angeordneten Federn wird der Stellkolben 7 in seine mittlere Position gebracht. In der mittleren Position ist die Hydropumpe 1 auf verschwindendes Fördervolumen eingestellt, so daß ein weiterer Druckanstieg in den Arbeitsleitungen vermieden wird.

Gleiche Merkmale werden bei den nachfolgenden Ausführungsbeispielen gleich bezeichnet. Auf eine ausführliche Beschreibung wird zur Vermeidung von Wiederholungen verzichtet.

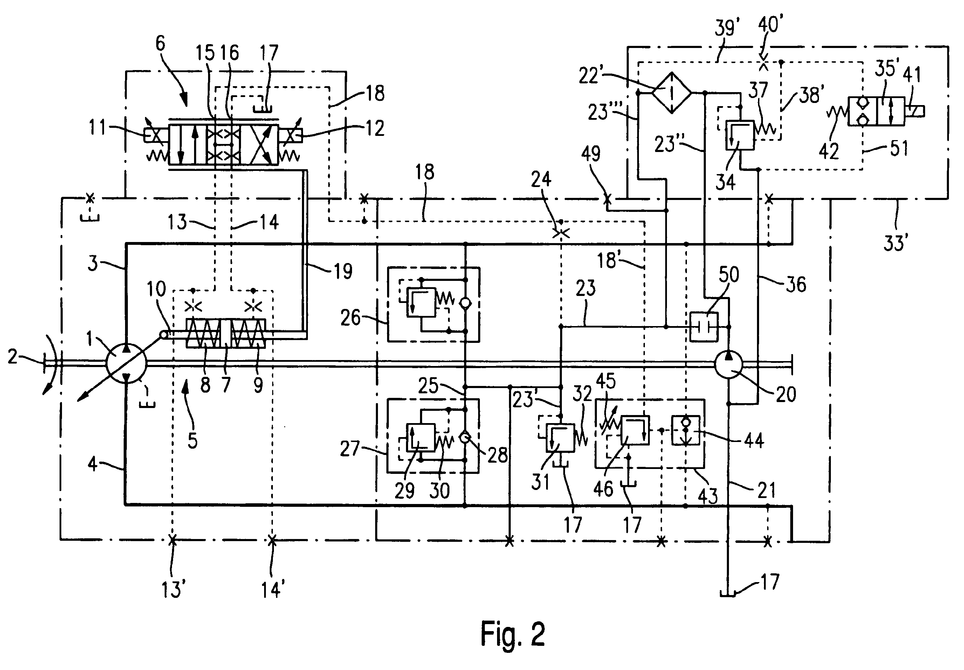

Bei dem in der Fig. 2 dargestellten zweiten Ausführungsbeispiel des erfindungsgemäßen hydraulischen Kreislaufs ist das Filter 22' zum Filtern von Druckmittel nicht auf der Saugseite der Speisepumpe 20, sondern in der Speisedruckabsenkungsvorrichtung 33' platziert. Die Filterung des Druckmittels erfolgt somit auf der Druckseite der Speisepumpe 20. Hierzu fördert die Speisepumpe 20 nicht unmittelbar in die Speisedruckleitung 23, sondern ist von dieser durch ein Absperrglied 50 getrennt. Somit fördert die Speisepumpe 20 direkt in den zweiten Speisedruckleitungsabzweig 23'', der über das Filter 22' und den stromabwärts des Filters 22' angeordneten dritten Speisedruckleitungsabzweig 23''' mit der Speisedruckleitung 23 verbunden ist. Das in die Speisedruckleitung 23 geförderte Druckmittel wird somit auf der Druckseite der Speisepumpe 20 durch das Filter 22' gefördert. Ferner ist die Verbindungsleitung 39' mit dem dritten Speisedruckleitungsabzweig 23''' verbunden. In der Verbindungsleitung 39' ist die Steuerdruckdrossel 40' angeordnet. Stromabwärts der Steuerdruckdrossel 40' zweigt von der Verbindungsleitung 39' die Steuerdruckleitung 38' ab und beaufschlagt das Speisedruckhalteventil 34 gleichsinnig mit der Ventileinstellfeder 37.

Die stromabwärtige Seite der Verbindungsleitung 39' mündet an dem Absenkventil 35' aus. Das Absenkventil 35' ist in dem dargestellten zweiten Ausführungsbeispiel als Sitzventil ausgeführt. Der zweite Anschluss des Absenkventils 35' ist über eine zweite Verbindungsleitung mit der Absenkleitung 36 verbunden. Das zur Reduzierung des Drucks in der Steuerdruckleitung 38' über das Absenkventil 35' entnommene Druckmittel wird somit nicht, wie es in der Fig. 1 dargestellt war, in ein Tankvolumen 17 entsorgt sondern über die Absenkleitung 36 der Saugleitung 21 zugeführt.

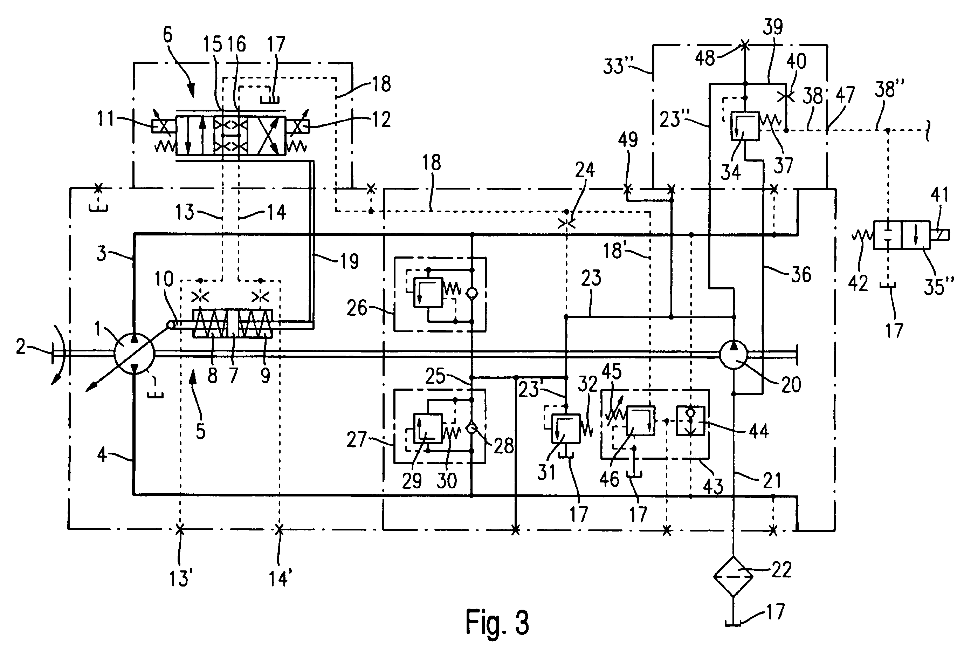

Der in Fig. 3 dargestellte hydraulische Kreislauf entspricht im wesentlichen dem in Fig. 1 gezeigten Ausführungsbeispiel. Im Gegensatz zu dem Ausführungsbeispiel der Fig. 1 ist jedoch das Absenkventil 35'' nicht in der Speisedruckabsenkungsvorrichtung 33 angeordnet. Vielmehr ist die Steuerdruckleitung 38 über einen Anschluß 47 aus dem Gehäuse herausgeführt und kann mit entsprechenden Speisedruckabsenkungsvorrichtungen weiterer hydraulischer Kreise verbunden werden. Das Absenkventil 35'' entspannt dann die Steuerdruckverbindungsleitung 38" gemeinsam für mehrere hydraulische Kreise. Sowohl der erste Druckwert als auch der zweite Druckwert können für die hydraulischen Kreise jeweils individuell eingestellt werden. Die Entspannung der Steuerdruckverbindungsleitung 38'' erfolgt auf das Druckniveau des Tankvolumens 17. Damit wird in jedem hydraulischen Kreislauf ein Speisedruck aufrechterhalten, der individuell durch die jeweilige Ventileinstellfeder der Speisedruckhalteventile vorgegeben ist.

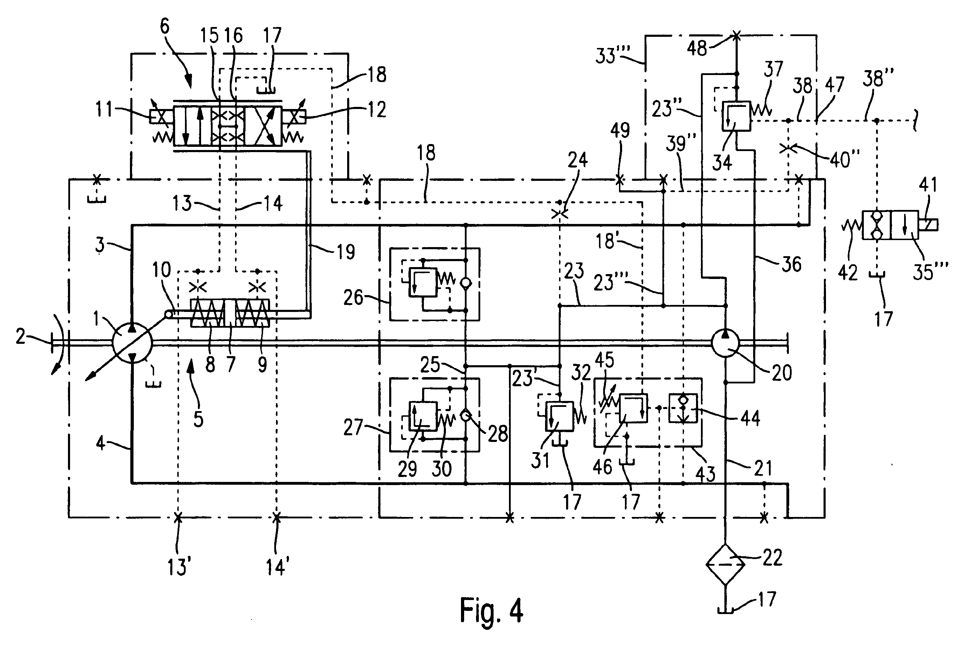

Das in der Fig. 4 gezeigte vierte Ausführungsbeispiel zeigt eine alternative Erzeugung des Steuerdrucks für das Speisedruckhalteventil 34. Der hydraulische Kreislauf der Fig. 4 geht aus von dem hydraulischen Kreislauf der Fig. 3 hervor. Das Absenkventil 35''' ist wie bei dem zweiten Ausführungsbeispiel als Sitzventil ausgeführt.

Zur Erzeugung des Steuerdrucks für das Speisedruckhalteventil 34 ist die Steuerdruckleitung 38 über eine Verbindungsleitung 39'' mit dem dritten Speisedruckleitungsabzweig 23''' verbunden. In der Verbindungsleitung 39'' ist die Steuerdruckdrossel 40'' angeordnet. Mit der vorgeschlagenen Anordnung kann in der Druckabsenkungsvorrichtung 33''' die ansonsten aufwendigere Kanalführung entfallen.

Die Gestaltung des Absenkventils 35 als elektromagnetisch betätigbares Schaltventil ermöglicht in einfacher Weise, die Ansteuerung des Absenkventils 35 z.B. durch das Zündschloß oder einen Startknopf eines mobilen Arbeitsgeräts zu verbinden. Dabei wird automatisch mit Betätigen des Anlassers ein entsprechender Strom zu dem Elektromagnet 41 des Absenkventils 35, 35', 35'', 35''' geleitet. Erst wenn die Antriebsmaschine aus eigener Kraft läuft und der Anlasser nicht länger betätigt wird, wird automatisch die Stromzufuhr zu dem Elektromagneten 41 unterbrochen. Durch das bereits beschriebene Ansteigen des Drucks in der Steuerdruckleitung 38 bzw. über die Steuerdruckverbindungsleitung 38'' auch in den weiteren hydraulischen Kreisläufen werden die jeweiligen Speisedruckhalteventile geschlossen und durch die Speisepumpen der volle Speisedruck erzeugt.

Da die Steuerdruckverbindungsleitung 38" je nach Anordnung der hydraulischen Kreisläufe in einer mobilen Arbeitsmaschine unter Umständen ein erhebliches Volumen aufweisen kann, ist es vorteilhaft, das Einspeisen von Druckmitteln in die Steuerdruckverbindungsleitung 38'' in jedem hydraulischen Kreislauf über dessen Steuerdruckleitung durchzuführen. Um ein sicheres Absenken des Steuerdrucks in der Steuerdruckverbindungsleitung 38" auf das Druckniveau des Tankvolumens sicherzustellen, muß der Strömungsquerschnitt in dem Absenkventil 35'' in geöffnetem Zustand der Verwendung mehrerer Steuerdruckdrosseln angepaßt werden, um eine nahezu ungedrosselte Entlastung zu erreichen.

An dem hydraulischen Kreislauf können auch noch weitere Anschlüsse 48 und 49 vorgesehen sein, an denen beispielsweise ein zusätzlicher Filter angeschlossen werden kann.

Die Erfindung ist nicht auf die dargestellten Ausführungsbeispiele beschränkt. Vielmehr sind auch Kombinationen einzelner Merkmale der Ausführungsbeispiele in beliebiger Weise möglich.

## Patentansprüche

1. Hydraulischer Kreislauf mit einer Arbeitspumpe (1) und einer Speisepumpe (20) zum Erzeugen eines Speisedrucks und mit einem Speisedruckbegrenzungsventil (31) zum Begrenzen des von der Speisepumpe (20) erzeugten Speisedrucks auf einen ersten Druckwert, wobei der Speisedruck durch eine Speisedruckabsenkungsvorrichtung (33, 33', 33", 33"') auf einen niedrigeren zweiten Druckwert absenkbar ist;
**dadurch gekennzeichnet,**
**dass** zum Absenken des Speisedrucks durch die Speisedruckabsenkungsvorrichtung (33, 33', 33", 33"' ) eine förderseitig mit der Speisepumpe (20) verbundene Speisedruckleitung (23) mit einer Saugleitung (21) einer Saugseite der Speisepumpe (20) zum Entspannen der Speisedruckleitung (23) in die Saugleitung (21) verbindbar ist.

2. Hydraulischer Kreislauf nach Anspruch 1,
**dadurch gekennzeichnet,**
**dass** die Speisedruckabsenkungsvorrichtung (33, 33', 33 " , 33"') ein Speisedruckhalteventil (34) umfasst.

3. Hydraulischer Kreislauf nach Anspruch 2,
**dadurch gekennzeichnet,**
**dass** das Speisedruckhalteventil (34) als Differenzdruckventil ausgebildet ist.

4. Hydraulischer Kreislauf nach Anspruch 2 oder 3,
**dadurch gekennzeichnet,**
**dass** ein an dem Speisedruckhalteventil (34) angreifender Steuerdruck durch ein Absenkventil (35, 35', 35", 35"') steuerbar ist.

5. Hydraulischer Kreislauf nach Anspruch 4,
**dadurch gekennzeichnet,**
**dass** das Absenkventil (35, 35', 35", 35"') ein elektromagnetisch betätigtes Schaltventil ist.

6. Hydraulischer Kreislauf nach Anspruch 4 oder 5,
**dadurch gekennzeichnet,**
**dass** durch das Absenkventil (35, 35', 35", 35"') eine den Steuerdruck führende Steuerdruckleitung (38, 38') in ein Tankvolumen (17) oder die Saugleitung (21) entspannbar ist.

7. Hydraulischer Kreislauf nach Anspruch 6,
**dadurch gekennzeichnet,**
**dass** zum Erzeugen des Steuerdrucks die Steuerdruckleitung (38, 38') über eine Steuerdruckdrossel (40, 40', 40'') mit der Speisedruckleitung (23) verbunden ist.

8. Hydraulischer Kreislauf nach Anspruch 7,
**dadurch gekennzeichnet,**
**dass** ein Filter (22') zum Filtern von Druckmittel zwischen der Speisepumpe (20) und der Speisedruckleitung (23) angeordnet ist.

9. Hydraulischer Kreislauf nach Anspruch 8,
**dadurch gekennzeichnet,**
**dass** die Steuerdruckdrossel (40') stromabwärts des Filters (22') angeordnet ist.

10. Hydraulischer Kreislauf nach Anspruch 6 oder 7,
**dadurch gekennzeichnet,**
**dass** die Steuerdruckleitung (38, 38') zumindest mit einer weiteren Speisedruckabsenkungsvorrichtung eines weiteren hydraulischen Kreislaufs verbunden ist und über das Absenkventil (35", 35''') gemeinsam steuerbar ist.

## Claims

1. Hydraulic circuit with a work pump (1) and a supply pump (20) for generating a supply pressure, and with a supply pressure relief valve (31) for limiting the supply pressure generated by the supply pump (20) to a first pressure value, whereby the supply pressure can be lowered by a supply pressure lowering device (33, 33', 33", 33"') to a lower second pressure value;
**characterised in that**
for lowering the supply pressure by means of the supply pressure lowering device (33, 33', 33", 33"'), a supply pressure line (23) connected to the supply pump (20) on the discharge side, can be connected with a suction line (21) of a suction side of the supply pump (20) for relieving the supply pressure line (23) into the suction line (21).

2. Hydraulic circuit according to claim 1,
**characterised in that**
the supply pressure lowering device (33, 33', 33", 33"') includes a supply pressure retaining valve (34).

3. Hydraulic circuit according to claim 2,
**characterised in that**
the supply pressure retaining valve (34) is designed as a differential pressure valve.

4. Hydraulic circuit according to claim 2 or 3,
**characterised in that**
a control pressure acting on the supply pressure retaining valve (34) can be controlled by a lowering valve (35, 35', 35", 35"').

5. Hydraulic circuit according to claim 4,
**characterised in that**
the lowering valve (35, 35', 35", 35"') is an electromagnetically activated switching valve.

6. Hydraulic circuit according to claim 4 or 5,
**characterised in that**
a control pressure line (38, 38') controlling the control pressure can be relieved in a tank volume (17) or the suction line (21) by means of the lowering valve (35, 35', 35", 35"').

7. Hydraulic circuit according to claim 6,
**characterised in that**
for generation of the control pressure, the control pressure line (38, 38') is connected to the supply pressure line (23) by a control pressure throttle (40, 40', 40").

8. Hydraulic circuit according to claim 7,
**characterised in that**
a filter (22') is arranged for filtering pressurising agents between the supply pump (20) and the supply pressure line (23).

9. Hydraulic circuit according to claim 8,
**characterised in that**
the control pressure throttle (40') is arranged downstream of the filter (22').

10. Hydraulic circuit according to claim 6 or 7,
**characterised in that**
the control pressure line (38, 38') is connected to at least one other control pressure lowering device of another hydraulic circuit, and is jointly controllable by means of the lowering valve (35", 35"').

## Revendications

1. Circuit hydraulique avec une pompe de travail (1) et une pompe d'alimentation (20) pour la production d'une pression d'alimentation, et avec une soupape de limitation de pression d'alimentation (31) pour la limitation à une première valeur de pression de la pression d'alimentation produite par la pompe d'alimentation (20), la pression d'alimentation pouvant être abaissée à une deuxième valeur de pression plus faible par un dispositif d'abaissement de pression d'alimentation (33, 33', 33", 33"') ;
**caractérisé en ce que**,
pour abaisser la pression d'alimentation par le dispositif d'abaissement de pression d'alimentation (33, 33', 33", 33"'), une conduite de pression d'alimentation (23) raccordée côté refoulement à la pompe d'alimentation (20) peut être raccordée à une conduite d'aspiration (21) d'un côté aspiration de la pompe d'alimentation (20) pour la détente de la conduite de pression d'alimentation (23) dans la conduite d'aspiration (21).

2. Circuit hydraulique selon la revendication 1,
**caractérisé en ce que**
le dispositif d'abaissement de pression d'alimentation (33, 33', 33", 33"') comprend une soupape de maintien de pression d'alimentation (34).

3. Circuit hydraulique selon la revendication 2,
**caractérisé en ce que**
la soupape de maintien de pression d'alimentation (34) est constituée en tant que soupape de pression différentielle.

4. Circuit hydraulique selon la revendication 2 ou 3,
**caractérisé en ce**
**qu'**une pression de commande agissant sur la soupape de maintien de pression d'alimentation (34) peut être commandée par une soupape d'abaissement (35, 35', 35", 35"').

5. Circuit hydraulique selon la revendication 4,
**caractérisé en ce que**
la soupape d'abaissement (35, 35', 35", 35"') est une soupape de commande à actionnement électromagnétique.

6. Circuit hydraulique selon la revendication 4 ou 5,
**caractérisé en ce que**,
sous l'action de la soupape d'abaissement (35, 35', 35", 35"'), une conduite de pression de commande (38, 38') conduisant la pression de commande peut être détendue dans un volume de cuve (17) ou dans la conduite d'aspiration (21).

7. Circuit hydraulique selon la revendication 6,
**caractérisé en ce que**,
pour la production de la pression de commande, la conduite de pression de commande (38, 38') est raccordée à la conduite de pression d'alimentation (23) par le biais d'un papillon de pression de commande (40, 40', 40").

8. Circuit hydraulique selon la revendication 7,
**caractérisé en ce**
**qu'**un filtre (22') est disposé entre la pompe d'alimentation (20) et la conduite de pression d'alimentation (23) pour le filtrage de l'agent de pression.

9. Circuit hydraulique selon la revendication 8,
**caractérisé en ce que**
le papillon de pression de commande (40') est disposé en aval du filtre (22').

10. Circuit hydraulique selon la revendication 6 ou 7,
**caractérisé en ce que**
la conduite de pression de commande (38, 38') est raccordée à au moins un autre dispositif d'abaissement de pression d'alimentation d'un autre circuit hydraulique et peut être commandée en commun par le biais de la soupape d'abaissement (35", 35"').
